(19) Europäisches Patentamt
European Patent Office
Office européen des brevets

(11) **EP 1 836 540 B1**

(12) **EUROPÄISCHE PATENTSCHRIFT**

(45) Veröffentlichungstag und Bekanntmachung des Hinweises auf die Patenterteilung:
**07.10.2009 Patentblatt 2009/41**

(51) Int Cl.:
***G05B 21/02*** *(2006.01)*   ***G05B 9/02*** *(2006.01)*

(21) Anmeldenummer: **05760699.8**

(86) Internationale Anmeldenummer:
**PCT/EP2005/053442**

(22) Anmeldetag: **18.07.2005**

(87) Internationale Veröffentlichungsnummer:
**WO 2006/029924 (23.03.2006 Gazette 2006/12)**

(54) **VERFAHREN ZUM VERARBEITEN VON SENSORDATEN**

METHOD FOR PROCESSING SENSOR DATA

PROCEDE POUR TRAITER DES DONNEES DE CAPTEUR

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **15.09.2004 DE 102004044466**

(43) Veröffentlichungstag der Anmeldung:
**26.09.2007 Patentblatt 2007/39**

(73) Patentinhaber: **ROBERT BOSCH GMBH**
**70442 Stuttgart (DE)**

(72) Erfinder: **MORGENTHAL, Robert**
**70806 Kornwestheim (DE)**

(56) Entgegenhaltungen:
**DE-A1- 19 734 248**   **US-A1- 2003 171 853**

**Beschreibung**

Stand der Technik

In Systemen mit Verfahren, welche Daten asynchroner Sensoren nutzen, sind die Sensordatenwerte prinzipbedingt unterschiedlich alt. Werden Simulationen über Abtastvariationen betrachtet, dann werden die Sensordaten stark aufgeweitet. Dadurch müssen die Verfahren, beispielsweise Auslöseverfahren für Personenschutzmittel, welche die verarbeiteten Sensordatenwerte verwenden, entsprechend robust gegen diese Sensordatenvariationen ausgelegt werden, wodurch die Erfüllung von Kundenanforderungen deutlich erschwert und die Systemkosten erhöht werden.

Um diese Effekte zu kompensieren können die asynchronen Sensordatenwerte mittels einer Interpolation zum Algorithmusraster quasi-synchronisiert werden. Die Faktoren zur Interpolation sind jedoch von der Übertragungsrate der Sensoren und von der Abtastrate abhängig. Wie alle Bauteile unterliegen auch Oszillatoren und damit die erzeugten Übertragungsraten und Abtastraten Toleranzen, die das Interpolationsergebnis und damit die verarbeiteten Signale verfälschen.

Aus DE 197 34 248 A1 ist es bekannt, dass ein Verfahren zur Übertragung von Ausgangssignalen von inertialen Sensoren an ihren jeweiligen Datenverarbeitungseinrichtungen vorzusehen. Durch das erfindungsgemäße Verfahren wird ein pulsweitenmoduliertes Sensorausgangssignal in ein Übertragungssignal umverteilt, das nach der Übertragung und vor der Datenverarbeitung rückabgetastet wird. Damit soll der Aliasing-Effekt verhindert werden und auch korrekte Zeitbeziehungen beim Umschalten der Arbeitbereiche eines Sensors aufrecht erhalten werden.

Vorteile der Erfindung

Das erfindungsgemäße Verfahren zum Verarbeiten von Sensordaten mit den Merkmalen des unabhängigen Patentanspruchs hat demgegenüber den Vorteil, dass durch das Abschätzen des Abtastverhältnisses der Abtastrate zur Übertragungsrate eine Berechnung der Mittelwerte unabhängig von Toleranzen der Abtastrate und/oder der Übertragungsrate wird. Dadurch lassen sich Abtasttoleranzen wie sie bei Bauteilen unvermeidbar sind kompensieren und die Messergebnisse werden nicht mehr verfälscht. Zudem wird in vorteilhafter Weise die Streuung der Sensordaten verringert, welche sich durch Signalvariationen bei der asynchronen Sensorabtastung und auch durch die Toleranzen der Übertragungsrate und der Abtastrate ergibt. Dadurch kann die Robustheit eines Verfahrens verbessert werden, welches die verarbeiteten Daten als Eingabewerte verwendet, namlich zur Auslösung von Personenschutzmittel wie Airbag, Gurtstraffer usw.

Damit wird auch das Gesamtsystem, das aus asynchronen Sensoren und einem Steuergerät mit Auswerteverfahren besteht, bezüglich Signalvariationen verbessert, welche prinzipbedingt in der Realität auftreten. Durch die reduzierte Signalstreuung können Kundenanforderungen leichter erfüllt und die Systemkosten reduziert werden. Zur Abschätzung des Abtastverhältnisses werden die Anzahl von übertragenen Datenwerten und die Anzahl von Abtastimpulsen innerhalb einer vorgebbaren Zeitspanne ermittelt und zueinander in Beziehung gesetzt.

Die verarbeiteten Sensordaten werden als Eingabewerte eines Auslöseverfahrens für Personenschutzmittel verwendet werden, wobei der mindestens eine asynchrone Sensor beispielsweise als Teil einer Upfrontsensorik und/oder einer Umfeldsensorik und/oder einer Seitenaufprallsensorik und/oder einer Kontaktsensorik für den Fußgängerschutz ausgeführt wird.

Durch die in den abhängigen Ansprüchen aufgeführten Maßnahmen und Weiterbildungen sind vorteilhafte Verbesserungen des im unabhängigen Patentanspruch angegebenen Verfahrens zum Verarbeiten von Sensordaten möglich.

Besonders vorteilhaft ist, dass bei dem erfindungsgemäße Verfahren die Anzahl der innerhalb einer Abtastperiode gemittelten Sensordaten n oder (n+1) ist, wobei die Mittelwerte der ausgelesenen Sensordaten mit einer festen synchronisierten Phasenverschiebung bezüglich der Abtastrate berechnet werden, wobei die Phasenverschiebung bei der Mittelwertbildung von (n+1) Sensordaten bestimmt wird, und wobei n eine natürliche Zahl größer gleich zwei ist.

Des Weiteren ist es von Vorteil, dass jeweils die aus (n+1) Sensordaten berechneten Mittelwerte als Ausgangswert für eine Interpolation, vorzugsweise eine lineare Interpolation, der nachfolgenden aus n Sensordaten berechneten Mittelwerte verwendet werden, wobei die Interpolation unabhängig von den Toleranzen der Übertragungsrate und der Abtastrate ist.

Für die Interpolation wird in vorteilhafter Weise die Anzahl von aufeinander folgenden Mittelwertbildungsvorgängen ermittelt, welche jeweils den Mittelwert aus n ausgelesenen Sensordaten bilden, wobei die Anzahl auf Null zurückgesetzt wird, wenn der Mittelwert aus (n+1) Sensordaten gebildet wird.

Der Mittelwert für n innerhalb einer Abtastperiode auftretende Sensordaten kann beispielsweise in Abhängigkeit von der Anzahl der Mittelwertbildungen durch die lineare Interpolationsgleichung (1) interpoliert werden.

$$S_{M(ZS)} = ((ZÜ/ZA) - Div(ZÜ/ZA)) * ZS * (S_{Mneu} - S_{Malt}) + S_{Malt} \qquad (1)$$

mit $S_M$: Mittelwert,
ZS: Anzahl der Mittelwertbildungsvorgänge mit n Sensordatenwerten
ZÜ: Anzahl der Übertragungsdaten
ZA: Anzahl der Abtastimpulse.
Div: Ganzzahldivision ohne Rest

Zeichnung

Ausführungsbeispiele der Erfindung sind in der Zeichnung dargestellt und werden in der nachfolgenden Beschreibung näher erläutert.

Figur 1   ein Blockschaltbild einer Vorrichtung zur Durchführung des erfindungsgemäßen Verfahrens
Figur 2   ein Zeitablaufdiagramm zur Darstellung der Signale bei einem Verarbeitungsverfahren,
Figur 3   ein Zeitablaufdiagramm zur Darstellung der Signale bei einem erfindungsgemäßen Verarbeitungsverfahren,
Figur 4   eine schematische Darstellung der Signalstreuung für unterschiedliche Verarbeitungsverfahren mit Übertragungs- und Abtastraten ohne Toleranzen,
Figur 5   eine schematische Darstellung der Signalstreuung für unterschiedliche Verarbeitungsverfahren mit einer Übertragungsrate mit maximaler negativer Abweichung und einer Abtastrate mit maximaler positiver Abweichung,
Figur 6   eine schematische Darstellung der Signalstreuung für unterschiedliche Verarbeitungsverfahren mit einer Übertragungsrate mit maximaler positiver Abweichung und einer Abtastrate mit maximaler negativer Abweichung,
Figur 7   eine schematische Darstellung der Signalstreuung für das erfindungsgemäße Verarbeitungsverfahren mit einer Übertragungsrate mit maximaler negativer Abweichung und einer Abtastrate mit maximaler positiver Abweichung, und
Figur 8   eine schematische Darstellung der Signalstreuung für das erfindungsgemäße Verarbeitungsverfahren mit einer Übertragungsrate mit maximaler positiver Abweichung und einer Abtastrate mit maximaler negativer Abweichung.

Beschreibung

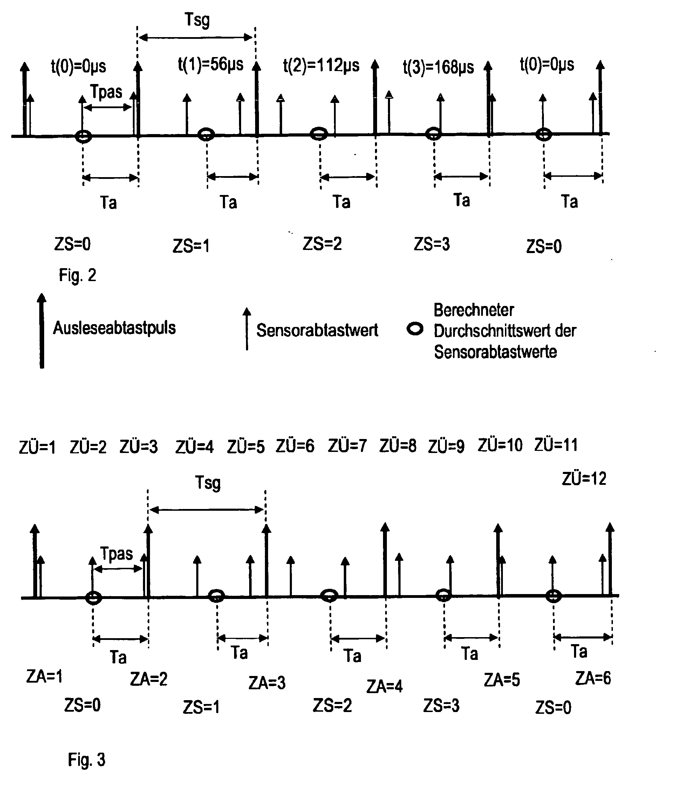

Nach dem aktuellen Stand der Technik werden ausgelagerte periphere Sensoren 10 über eine Zuleitung an ein Steuergerät 100 angeschlossen. Wie aus Fig. 2 ersichtlich ist, sendet der mindestens eine asynchrone ausgelagerte Sensor 10 bei einem herkömmlichen Verarbeitungsverfahren die Sensordaten mit festen Zeitabständen Tpas von z.B. 228us an das Steuergerät 100. Die Daten werden zwischengespeichert und beispielsweise mit einer Abtastrate Tsg von 512$\mu$s abgetastet, wobei zur Weiterverarbeitung die Mittelwerte der ausgelesenen Sensordaten mit einer festen synchronisierten Phasenverschiebung Ta bezüglich der Abtastrate Tsg berechnet werden. Der Mittelwert für n innerhalb einer Abtastperiode auftretende Sensordaten in Abhängigkeit von der Anzahl kann beispielsweise durch die Gleichung (2) ermittelt werden:

$$S_{M(ZS)} = (t_{(ZS)}/Tpas) * (S_{Mneu} - S_{Malt}) + S_{Malt} \qquad (2)$$

mit $S_M$: Mittelwert,
ZS: Anzahl der Mittelwertbildungsvorgänge mit n Sensordatenwerten
Tpas: Übertragungsrate.

Für eine laufzeitoptimale Implementierung in einem Steuergerät kann beispielsweise der von der Anzahl ZS abhängige Faktor $(t_{(ZS)}/Tpas)$ im Voraus berechnet und gespeichert werden. Die im Voraus berechneten Faktoren können beispielsweise in einem Array mit einem Index abgelegt werden, welcher der jeweiligen Anzahl ZS entspricht. Die Zeitspanne $t_{(ZS)}$ repräsentiert allgemein den zeitlichen Abstand zwischen dem interpolierten Wert und dem direkt vorhergehenden übertragenen Sensordatenwert und kann beispielsweise durch die Gleichung (3) berechnet werden:

$$t_{(ZS)}=(Tgs-Tpas*Div(Tgs/Tpas))*ZS \qquad (3)$$

mit Tgs: Abtastrate
Div: Ganzzehldivision ohne Rest

Die allgemeine Gleichung (4) für eine lineare Interpolation ergibt sich dann aus den Gleichungen (2) und (3):

$$S_{M(ZS)}=((Tgs/Tpas)-Div(Tgs/Tpas))*ZS*(S_{Mneu}-S_{Malt})+S_{Malt} \qquad (4)$$

Die Faktoren zur Interpolation sind jedoch von der Übertragungsrate der Sensoren und von der Abtastrate des Steuergerätes abhängig, welche jeweils Toleranzen aufweisen können, welche das Interpolationsergebnis und damit Eingabedaten für ein nachfolgendes Auslöseverfahren verfälschen.

Erfindungsgemäß wird daher das Abtastverhältnis der Abtastrate Tsg zur Übertragungsrate Tpas zur Berechnung der Mittelwerte geschätzt, wobei zur Schätzung des Abtastverhältnisses die Anzahl ZÜ von übertragenen Datenwerte und die Anzahl ZA von Abtastimpulsen innerhalb einer vorgebbaren Zeitspanne ermittelt und zueinander in Beziehung gesetzt werden. Durch die Schätzung des Abtastverhältnisses wird die Berechnung der Mittelwerte unabhängig von den Toleranzen der Abtastrate und/oder der Übertragungsrate.

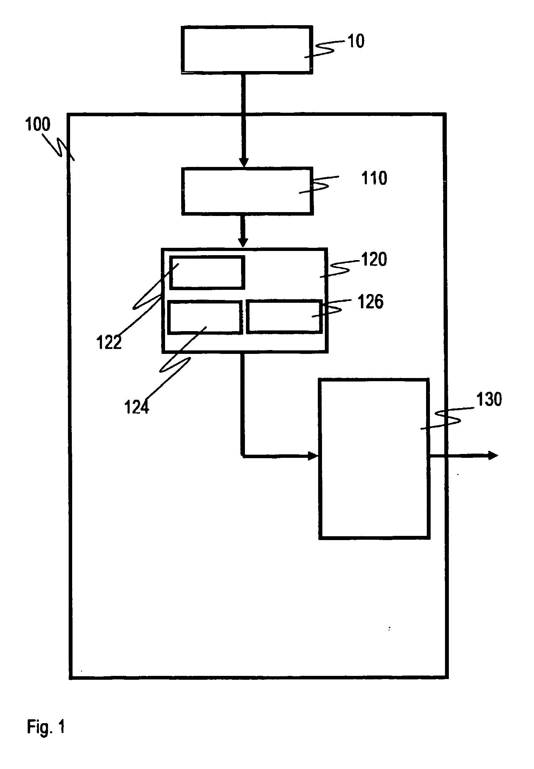

Figur 1 zeigt ein Blockschaltbild einer Vorrichtung zur Durchführung des erfindungsgemäßen Verfahrens zum Verarbeiten von Sensordaten und Figur 3 zeigt ein Zeitablaufdiagramm zur Darstellung der Signale bei dem erfindungsgemäßen Verarbeitungsverfahren. Nachfolgend wird das erfindungsgemäße Verfahren unter Bezugnahme auf die Fig. 1 und 3 beschrieben.

Wie aus Fig. 1 ersichtlich ist, umfasst die Vorrichtung eine ausgelagerte Sensorik 10, die mindestens einen asynchronen Sensor umfasst und über eine Zuleitung an ein Steuergerät 100 angeschlossen ist. Die Sensorik 10 überträgt Sensordaten mit festen Zeitabständen Tpas von z.B. 228us mit einer Toleranz von +/- 12$\mu$s an das Steuergerät 100. Die übertragenen Sensordaten werden in einem Zwischenspeicher 110 zwischengespeichert. Das Steuergerät 100 umfasst eine Auswerte- und Steuereinheit 120, die beispielsweise als Mikroprozessor ausgeführt ist und die Daten zyklisch mit einer Abtastrate Tsg von z.B. 512$\mu$s mit einer Toleranz von +/- 6$\mu$s aus dem Zwischenspeicher 110 ausliest, verarbeitet und beispielsweise Eingabewerte für eine Auslöseeinheit 130 erzeugt, welche nicht dargestellte Personenschutzmittel, wie Airbag, Gurtstraffer usw. ansteuert. Durch das Auslesen der Sensordaten wird der Zwischenspeicher 110 geleert. Der Auslesezyklus Tsg=512$\mu$s ist bei der Übertragungsrate Tpas von 228$\mu$s so gewählt, dass zur Mittelwertbildung 2 oder 3 Sensordatenwerte innerhalb einer Abtastperiode ausgelesen werden. Die Auswerte- und Steuereinheit 120 umfasst einen ersten Zähler 122, welcher die Mittelwertbildungsvorgänge zählt, bei welchen der Mittelwert aus zwei innerhalb einer Abtastperiode Tsg übertragenen Sensordatenwerten gebildet wird, einen zweiten Zähler 124, welcher die Anzahl ZÜ der innerhalb einer vorgebbaren Zeitspanne übertragenen Sensordaten zählt, und einen dritten Zähler 126, welcher innerhalb der vorgegebenen Zeitspanne die Anzahl ZA der Abtastimpulse zählt. Werden innerhalb einer Abtastperiode Tsg drei Sensordatenwerte übertragen, dann setzt der entsprechende Mittelwertbildungsvorgang den Zähler 122 auf Null zurück. Die Zählerstände ZS, ZÜ bzw. ZA der Zähler 122, 124 bzw. 126 werden für eine Interpolation, vorzugsweise eine lineare Interpolation, der Mittelwerte verwendet.

Fig. 3 zeigt beispielhaft, dass durch das Verhältnis der Übertragungsrate Tpas zur Abtastrate Tsg zwei oder drei Sensordatenwerte innerhalb einer Abtastperiode übertragen werden. Während der ersten Abtastperiode Tsg werden beispielsweise drei Sensordatensignale abgetastet und der Zählerstand ZS des Zählers 122 auf Null gesetzt. Werden innerhalb einer Abtastperiode Tsg drei Sensordatenwerte ausgelesen, dann geht das Verfahren davon aus, dass diese mittig bezüglich der Abtastimpulse angeordnet sind. Mittels einer nachfolgenden Interpolation wird der Mittelwert der Sensorsignale mit einer konstanten Phasenverschiebung von beispielsweise Ta=256$\mu$s bezüglich der Abtastimpulse berechnet, d.h. mit der halben Periodendauer des Abtastsignals Tsg.

Die Interpolation für die Mittelwerte der nachfolgenden Mittelwertberechnungen, die nur zwei übertragene Sensordatenwerte berücksichtigen, wird beispielsweise durch eine lineare Interpolation gemäß der Gleichung (1) berechnet:

$$S_{M(ZS)}=((Z\ddot{U}/ZA)-Div(Z\ddot{U}/ZA))*ZS*(S_{Mneu}-S_{Malt})+S_{Malt} \qquad (1)$$

mit $S_M$: Mittelwert,

ZS: Anzahl der Mittelwertbildungsvorgänge mit n Sensordatenwerten
ZÜ: Anzahl der Übertragungsdaten
ZA: Anzahl der Abtastimpulse.
Div: Ganzzahldivision ohne Rest

Wie weiter aus Fig. 3 ersichtlich ist, erhöht sich der Zählerstand ZS des ersten Zählers 122 durch jede der Mittelwertbildungsvorgänge mit zwei Sensordaten bis zu einem Zählerstand von drei. Dann wird der Zähler 122 durch den Mittelwertbildungsvorgang mit drei Sensorwerten wieder auf Null zurückgesetzt. Der Zählerstand ZÜ des zweiten Zählers 124 erhöht sich durch jeden übertragenen Datenwert und der Zählerstand ZA des dritten Zählers 126 erhöht sich durch jeden Abtastpuls. Der Zeitraum in welchem der zweite und dritte Zähler betrieben werden ist von der gewünschten Genauigkeit abhängig. Anstatt der linearen Interpolation können zur Bestimmung des Mittelwertes auch Interpolationen höherer Ordnung angewendet werden.

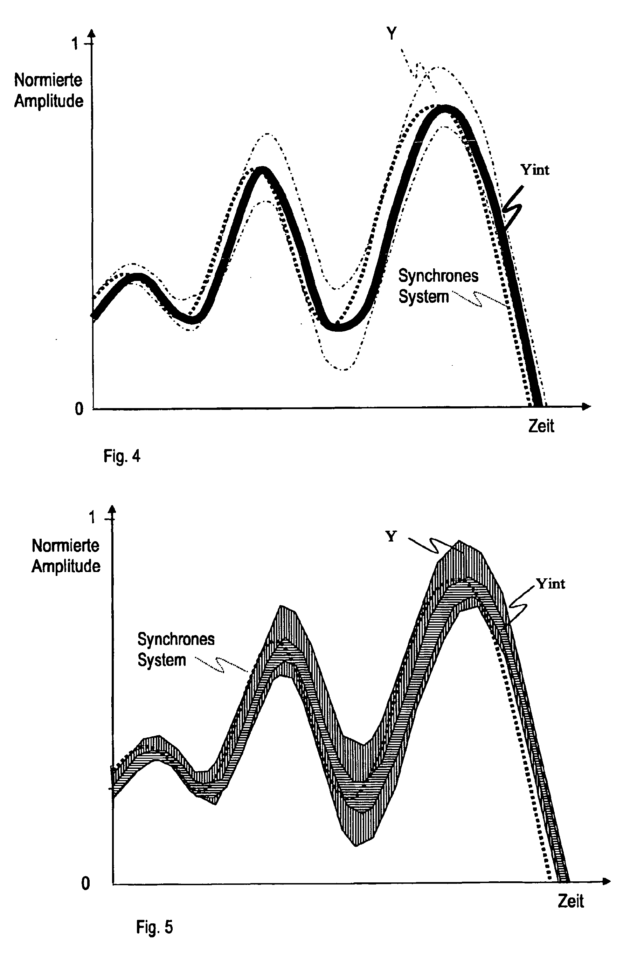

Die Fig. 4 bis 8 zeigen unterschiedlichen Signalvarianzen mit Übertragungsraten und Abtastraten mit unterschiedlichen Abweichungen, wobei jeweils beispielhaft eine Crashsimulation über ca. 400 Abtastperioden, was ca. 900 Übertragungsperioden entspricht, von verschiedenen Verarbeitungsverfahren mit normierten Signalamplituden dargestellt ist. Figur 4 zeigt eine schematische Darstellung der Signalstreuung für verschiedene Verarbeitungsverfahren, wobei die Übertragungsrate Tpas=228$\mu$s ist und die Abtastrate Tsg=512$\mu$s den gewünschten Werten ohne Toleranzen entsprechen. Die punktierte Linie zeigt zum Vergleich den Signalverlauf eines synchronen Systems, bei dem prinzipbedingt keine Varianz auftritt. Der fett dargestellte Signalverlauf Yint zeigt die Signalvarianz des Verarbeitungsverfahrens mit einer festen synchronisierten Phasenverschiebung Ta bezüglich der Abtastrate Tsg der Sensordatenwerte, die gemäß der Interpolationsgleichung (4) gemittelt werden, und der strichpunktiert dargestellte Rahmen zeigt den Bereich Y der Signalvarianz eines herkömmlichen Verfahrens mit Sensordatenwerten, die unterschiedlich alt sind.

Figur 5 zeigt eine schematische Darstellung der Signalstreuung für die in Fig. 4 angegebenen Verfahren, wobei die Übertragungsrate Tpas=228$\mu$s-12$\mu$s=216$\mu$s beträgt und die Abtastrate Tsg=512$\mu$s+6$\mu$s=518$\mu$s beträgt. Wie aus Fig. 5 ersichtlich ist, hat sich die waagerecht schraffiert dargestellte Signalvarianz Yint des Verarbeitungsverfahrens mit der festen synchronisierten Phasenverschiebung Ta verschlechtert, da die Interpolationsgleichung (4) die Berechnung immer noch mit den gewünschten Werten Tpas=228$\mu$s und Tgs=513$\mu$s ausführt und die auftretenden Toleranzen nicht berücksichtigt werden.

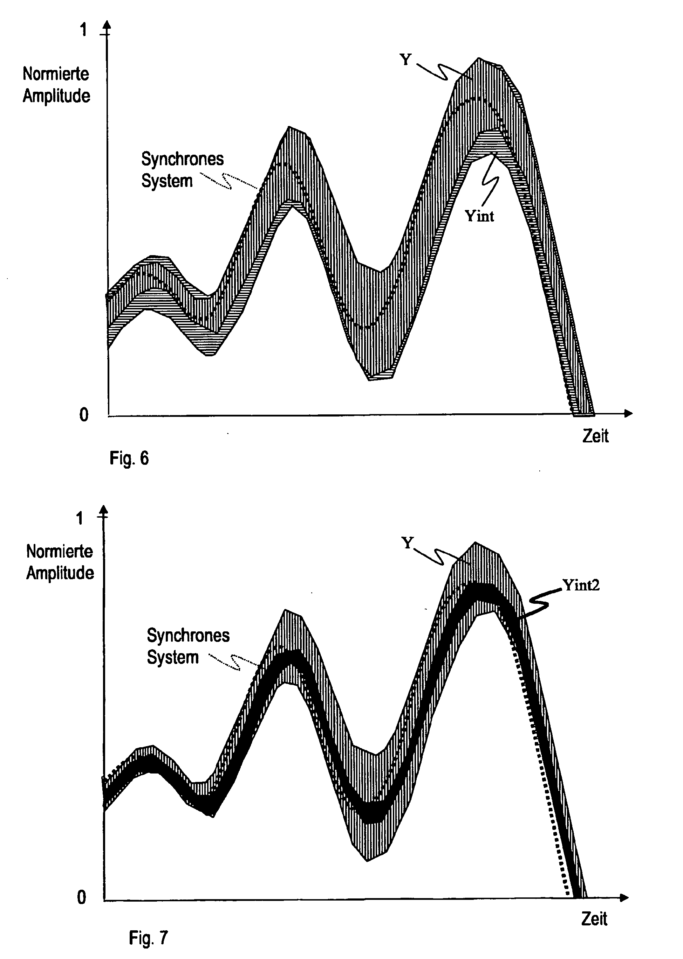

Figur 6 zeigt eine schematische Darstellung der Signalstreuung für die in Fig. 4 angegebenen Verfahren, wobei die Übertragungsrate Tpas=228$\mu$s+12$\mu$s=240$\mu$s beträgt und die Abtastrate Tsg=512$\mu$s-6$\mu$s=506$\mu$s beträgt. Wie aus Fig. 6 ersichtlich ist, hat sich die waagerecht schraffiert dargestellte Signalvarianz Yint des Verarbeitungsverfahrens mit der festen synchronisierten Phasenverschiebung Ta wesentlich verschlechtert, da die Interpolationsgleichung (4) die Berechnung immer noch mit den gewünschten Werten Tpas=228$\mu$s und Tgs=513$\mu$s ausführt und die auftretenden Toleranzen nicht berücksichtigt werden.

Figur 7 zeigt zum Vergleich die schwarz dargestellte Signalvarianz Yint2 des erfindungsgemäßen Verarbeitungsverfahrens, wobei die Übertragungsrate Tpas=228$\mu$s-12$\mu$s=216$\mu$s und die Abtastrate Tsg=512$\mu$s+6$\mu$s=518$\mu$s beträgt. Wie aus Fig. 7 ersichtlich ist, wird durch das erfindungsgemäße Verfahren eine leichte Reduzierung der Signalvarianz Yint2 gegenüber der Signalvarianz Yint aus Fig. 5 erreicht.

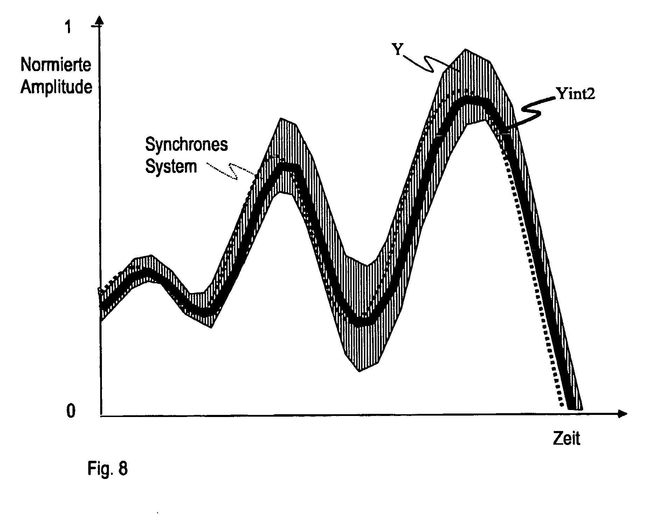

Figur 8 zeigt zum Vergleich die schwarz dargestellte Signalvarianz Yint2 des erfindungsgemäßen Verarbeitungsverfahrens, wobei die Übertragungsrate Tpas=228$\mu$s+121$\mu$s=240$\mu$s und die Abtastrate Tsg=512$\mu$s-6$\mu$s=506$\mu$s beträgt. Wie aus Fig. 8 ersichtlich ist, wird durch das erfindungsgemäße Verfahren eine wesentliche Reduzierung der Signalvarianz Yint2 gegenüber der Signalvarianz Yint aus Fig. 6 erreicht. Aus Fig. 7 und 8 wird ersichtlich, dass die Toleranzen der Übertragungsrate und/oder der Abtastrate das Ergebnis deutlich weniger stark beeinflussen wie bei den herkömmlichen Verfahren.

Das erfindungsgemäße Verfahren kann prinzipiell bei allen Systemen angewandt werden, welche Sensordaten von asynchronen Sensoren verarbeiten, um Eingabewerte für Auslöseverfahren von Personenschutzmittel zu erzeugen. Die Sensorik mit asynchronen Sensoren wird als Teil einer Upfrontsensorik und/oder einer Umfeldsensorik und/oder einer Seitenaufprallsensorik und/oder einer Kontaktsensorik für den Fußgängerschutz ausgeführt.

**Patentansprüche**

1. Verfahren zum Verarbeiten von Sensordaten, welche von mindestens einem asynchronen Sensor (10) mit einer Übertragungsrate (Tpas) übertragen werden, wobei die Sensordaten mit einer vorgegebenen Abtastrate (Tsg) ausgelesen werden, **dadurch gekennzeichnet, dass** aus einer vorgegebenen Anzahl ausgelesener Sensordaten ein Mittelwert ($S_M$) berechnet wird, dass das Abtastverhältnis der Abtastrate (Tsg) zur Übertragungsrate (Tpas) zur Berechnung der Mittelwerte geschätzt wird, wobei zur Schätzung des Abtastverhältnisses die Anzahl (ZÜ) von übertragenen Datenwerten und die Anzahl (ZA) von Abtastimpulsen innerhalb einer vorgebbaren Zeitspanne ermittelt und zueinander in Beziehung gesetzt werden, dass die verarbeiteten Sensordaten als Eingabewerte eines Auslöseverfahrens für Personenschutzmittel verwendet werden, dass der mindestens eine asynchrone Sensor (10) als Teil einer Upfrontsensorik und/oder einer Umfeldsensorik und/oder einer Seitenaufprallsensorik und/oder einer Kontaktsensorik für den Fußgängerschutz ausgeführt wird.

2. Verfahren nach Anspruch 1, **dadurch gekennzeichnet, dass** die Anzahl der innerhalb einer Abtastperiode gemittelten Sensordaten n oder (n+1) ist, wobei die Mittelwerte ($S_M$) der ausgelesenen Sensordaten mit einer festen synchronisierten Phasenverschiebung (Ta), bezüglich der Abtastrate (Tsg) berechnet werden, wobei Phasenverschiebung (Ta) bei der Mittelwertbildung von (n+1) Sensordaten bestimmt wird, und wobei n eine natürliche Zahl größer gleich zwei ist.

3. Verfahren nach Anspruch 1 oder 2, **dadurch gekennzeichnet, dass** jeweils die aus (n+1) Sensordaten berechneten Mittelwerte ($S_M$) als Ausgangswert für eine Interpolation der nachfolgenden aus n Sensordaten berechneten Mittelwerte ($S_M$) verwendet werden.

4. Verfahren nach Anspruch 3, **dadurch gekennzeichnet, dass** für die Interpolation die Anzahl (ZS) von aufeinander folgenden Mittelwertbildungsvorgängen ermittelt wird, welche jeweils den mittelwert ($S_M$) aus n ausgelesenen Sensordaten bilden, wobei die Anzahl (ZS) auf Null zurückgesetzt wird, wenn der Mittelwert ($S_M$) aus (n+1) Sensordaten gebildet wird.

5. Verfahren nach Anspruch3 oder 4, **dadurch gekennzeichnet, dass** der Mittelwert ($S_M$) für n innerhalb einer Abtastperiode (Tsg) auftretende Sensordaten in Abhängigkeit von der Anzahl (ZS) durch die lineare Interpolationsgleichung $S_{M(ZS)}=((Z\ddot{U}/ZA)-Div(Z\ddot{U}/ZA))*ZS*(S_{Mneu}-S_{Malt})+S_{Maft}$ interpoliert wird.

## Claims

1. Method for processing sensor data which are transmitted from at least one asynchronous sensor (10) at a transmission rate (Tpas), the sensor data being read at a predefined sampling rate (Tsg), **characterized in that** an average value ($S_M$) is calculated from a predefined number of sensor data items which have been read, **in that** the sampling ratio of the sampling rate (Tsg) to the transmission rate (Tpas) is estimated in order to calculate the average values, the number (ZÜ) of transmitted data values and the number (ZA) of sampling pulses within a predefinable period of time being determined and related to one another in order to estimate the sampling ratio, **in that** the processed sensor data are used as input values for a method for triggering personal protection means, and **in that** the at least one asynchronous sensor (10) is part of an upfront sensor system and/or a surroundings sensor system and/or a side-impact sensor system and/or a contact sensor system for pedestrian protection.

2. Method according to Claim 1, **characterized in that** the number of sensor data items averaged within a sampling period is n or (n+1), the average values ($S_M$) of the sensor data which have been read being calculated with a fixed synchronized phase shift (Ta) with respect to the sampling rate (Tsg), the phase shift (Ta) being determined when averaging (n+1) sensor data items, n being a natural number greater than or equal to two.

3. Method according to Claim 1 or 2, **characterized in that** the average values ($S_M$) calculated from (n+1) sensor data items are each used as an output value for interpolating the subsequent average values ($S_M$) calculated from n sensor data items.

4. Method according to Claim 3, **characterized in that** the number (ZS) of successive averaging operations which each form the average value ($S_M$) from n sensor data items which have been read is determined for the interpolation, the number (ZS) being reset to zero if the average value ($S_M$) is formed from (n+1) sensor data items.

5. Method according to Claim 3 or 4, **characterized in that** the average value ($S_M$) for n sensor data items occurring inside a sampling period (Tsg) is interpolated on the basis of the number (ZS) using the linear interpolation equation $S_{M(ZS)} = ((Z\ddot{U}/ZA) - Div (Z\ddot{U}/ZA))*ZS* (S_{Mneu}-S_{Malt}) +S_{Malt}$.

## Revendications

1. Procédé de traitement de données de détecteur qui sont transmises par au moins un détecteur asynchrone (10) à un débit de transfert (Tpas), les données de détecteur étant lues à un taux d'échantillonnage (Tsg) prédéterminé, **caractérisé en ce que**

une valeur moyenne ($S_M$) d'un nombre prédéterminé de données de détecteur lues est calculée,

**en ce que** le rapport entre le taux d'échantillonnage (Tsg) et le taux de transfert (Tpas) est estimé pour le calcul des valeurs moyennes, le nombre (ZÜ) des valeurs de données transmises et le nombre (ZA) d'impulsions d'échantillonnage pendant un intervalle de temps prédéterminé étant déterminés et leur rapport étant formé pour estimer le rapport entre les taux,

**en ce que** les données de détecteur traitées sont utilisées comme valeurs d'entrée d'un procédé de déclenchement de moyens de protection des personnes et

**en ce que** le ou les détecteurs asynchrones (10) sont configurés sous la forme d'un ensemble de détecteurs frontaux et/ou d'un ensemble de détecteurs d'environnement et/ou d'un ensemble de détecteurs de collision latérale et/ou d'un ensemble de détecteurs de contact pour la protection des piétons.

2. Procédé selon la revendication 1, **caractérisé en ce que** le nombre des données de détecteur dont la moyenne est calculée à l'intérieur d'une période d'échantillonnage est n ou (n+1), les valeurs moyennes ($S_M$) des données de détecteur lues étant calculées à un déphasage (Ta) fixe synchronisé par rapport au taux d'échantillonnage (Tsg), le déphasage (Ta) étant déterminé lors de la formation de la valeur moyenne de (n+1) données de détecteur, n étant un nombre naturel supérieur ou égal à 2.

3. Procédé selon les revendications 1 ou 2, **caractérisé en ce que** chaque valeur moyenne ($S_M$) calculée à partir de (n+1) données de détecteur est utilisée comme valeur initiale d'une interpolation des valeurs moyennes ($S_M$) suivantes calculées pour n données de détecteur.

4. Procédé selon la revendication 3, **caractérisé en ce que** pour l'interpolation, on détermine le nombre (ZS) des opérations successives de formation d'une valeur moyenne qui forment chacune la valeur moyenne ($S_M$) de n données de détecteur lues, le nombre (ZS) étant ramené à zéro lorsque la valeur moyenne ($S_M$) a été formée à partir de (n+1) données de détecteur.

5. Procédé selon les revendications 3 ou 4, **caractérisé en ce que** la valeur moyenne ($S_M$) de n données de détecteur qui surviennent pendant une période d'échantillonnage (Tsg) est interpolée en fonction du nombre (ZS) par l'équation d'interpolation linéaire $S_{M(ZS)} = ((ZÜ/ZA)\text{-}Div(ZÜ/ZA))*ZS*(S_{Mneu}\text{-}S_{Malt}) + S_{Malt}$.

Fig. 1

Tsg

t(0)=0µs    t(1)=56µs    t(2)=112µs    t(3)=168µs    t(0)=0µs

Tpas

Ta          Ta          Ta          Ta          Ta

ZS=0        ZS=1        ZS=2        ZS=3        ZS=0

Fig. 2

↑ Ausleseabtastpuls    ↑ Sensorabtastwert    O Berechneter Durchschnittswert der Sensorabtastwerte

ZÜ=1  ZÜ=2  ZÜ=3    ZÜ=4    ZÜ=5    ZÜ=6    ZÜ=7    ZÜ=8    ZÜ=9    ZÜ=10  ZÜ=11

ZÜ=12

Tsg

Tpas

Ta          Ta          Ta          Ta          Ta

ZA=1        ZA=2        ZA=3        ZA=4        ZA=5        ZA=6

ZS=0        ZS=1        ZS=2        ZS=3        ZS=0

Fig. 3

Fig. 4

Fig. 5

Fig. 6

Fig. 7

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19734248 A1